# NEUE EUROPÄISCHE PATENTSCHRIFT

(11) **EP 3 568 604 B2**
(45) Veröffentlichungstag und Bekanntmachung des Hinweises auf die Entscheidung über den Einspruch: **24.09.2025**
(45) Hinweis auf die Patenterteilung: 15.07.2020
(21) Anmeldenummer: 17700800.0
(22) Anmeldetag: 11.01.2017
(51) Int. Cl.: F16D 3/84, F16J 3/04

(54) **FALTENBALG MIT MINDESTENS EINER INNENNUT**
BELLOWS COMPRISING AT LEAST ONE INTERNAL GROOVE
SOUFFLET COMPORTANT AU MOINS UNE RAINURE INTERNE

(43) Veröffentlichungstag der Anmeldung: 20.11.2019
(73) Patentinhaber: GKN Driveline International GmbH, 53797 Lohmar (DE)
(72) Erfinder: DEISINGER, Markus, 53721 Siegburg (DE); WETTE, Joachim, 53773 Hennef (DE)
(74) Vertreter: Geskes, Christoph
(86) Internationale Anmeldenummer: PCT/EP2017/050487
(87) Internationale Veröffentlichungsnummer: WO 2018/130277

(56) Entgegenhaltungen:
- EP-A1- 2 730 795
- EP-A2- 0 924 450
- EP-A2- 0 942 189
- EP-A2- 1 182 372
- EP-A2- 1 273 834
- CN-A- 101 398 081
- DE-A1- 10 131 302
- DE-A1- 102004 037 715
- JP-A- 2002 340 013
- JP-A- 2004 108 435
- JP-A- 2013 204 685

## Beschreibung

Die vorliegende Erfindung betrifft einen Faltenbalg mit einem ersten Befestigungsbereich und einem zweiten Befestigungsbereich und einem zwischen diesen angeordneten Faltenbereich, wobei der erste Befestigungsbereich lobe Bereiche und/oder Führungsbereiche und Verbindungsbereiche und einen Bindersitzbereich umfasst, sowie eine Verwendung des erfindungsgemäßen Faltenbalges als auch eine Gelenk-Welle-Verbindung umfassend den erfindungsgemäßen Faltenbalg.

Faltenbalge der gattungsgemäßen Art dienen dazu, Gelenkbauteile insbesondere im Antriebsstrang von Kraftfahrzeugen und Nutzfahrzeugen jeglicher Art abzudichten. Gelenke in Form von Gleichlaufgelenken weisen dabei nach dem Stand der Technik üblicherweise auf ihrem Gelenkaußenteil drei am Umfang angeordnete radiale Vertiefungen auf. Die hierdurch geschaffene Außenkontur wird als trilobeförmig angesprochen und man spricht allgemein von triloben Gleichlaufgelenken. Aufgabe des Faltenbalges ist die Abdichtung des Gelenkbereiches, um einerseits das Eindringen von Schmutz und Feuchtigkeit zu verhindern, andererseits, um ein Austreten einer Fettfüllung des Gelenkes zu vermeiden.

Die Abdichtung erfolgt unter anderem dadurch, dass der Bundbereich eines Faltenbalges der triloben Außenkontur des Gelenkgehäuses durch Vorsehung von Materialverdickungen an entsprechenden Stellen angeformt ist. Die Verdickungen dienen dazu, die Radiusdifferenzen in der triloben Außenkontur des Gelenkgehäuses auszugleichen bei Zurverfügung-Stellung eines Befestigungsbereiches mit konstantem Radius , so dass zur Befestigung des Faltenbalges Befestigungselemente wie Klemmschellen oder Spannbänder, allgemeiner Binder, verwendet werden können.

CN 101398081 A offenbart einen im gelenkgehäuseseitigen Bindersitzbereich trilob ausgebildeten Faltenbalg mit im gelenkgehäuseseitigen Bindersitzbereich auf dessen Unterseite angeordneten drei Dichtrippen als auch Verstärkungselementen auf der der Unterseite des ersten Bindersitzbereiches abgewandten Außenseite zur Stabilisierung der loben Bereiche.

DE 10 2004 037 715 A1 offenbart einen Faltenbalg mit integriertem Falten-Gelenkbereich mit ersten Falten und weiteren Falten sowie mit mindestens einem Bundbereich, der erforderlichenfalls auf der Innenseite mindestens einen in einer Ringnut des Gelenkbauteiles eingreifenden innenliegenden Ringwulst und auf der Außenseite eine Ringnut mit einem Boden zur Aufnahme eines Spannmittels aufweist.

JP 2013204685 A offenbart einen für eine Montage an einem triloben Gelenkgehäuseteil geeigneten Faltenbalg mit einer spezifischen Ausbildung des wellenseitigen Bindersitzbereiches dahingehend, dass eine Aussparung auf einer Unterseite des wellenseitigen Bindersitzbereiches vorgesehen ist, in welche eine auf einer Oberseite des wellenseitigen Bindersitzbereiches angeordnete Materialanhäufung innerhalb einer umlaufenden Ringnut für ein Spannmittel verdrückbar ist.

Aus der EP 1 182 372 B1 ist ein gattungsgemäßer Faltenbalg bekannt, der in triloben Bereichen des einem Gelenkgehäuse zugewandten Befestigungsbereiches des Befestigungsmittels mindestens einen Schlitz mit einer Länge aufweist, der sich in Umfangsrichtung erstreckt, sowie eine Tiefe aufweist, die sich in radialer Richtung im Wesentlichen durch das gesamte Material des zugehörigen triloben Bereiches erstreckt, so dass der trilobe Bereich nicht stabil ist, wobei der mindestens eine Schlitz des triloben Bereiches über den Umfang des Faltenbalges in Abstand von zumindest einen weiteren Schlitz eines benachbarten triloben Bereiches angeordnet ist.

Nachteilig an diesem aus dem Stand der Technik bekannten Faltenbalg ist, dass aufgrund der massigen Ausführung des Befestigungsbereiches es zu Brüchen des Binders bei Befestigung desselben oder aber es aufgrund der ungleichmäßigen Aufbringung der Kräfte zu Dichtigkeitsproblemen im Bereich der Grenzfläche zu einer am Gelenkgehäuse außen angeordneten umlaufenden Gelenknut kommen kann. Werden mehrere parallel verlaufende Schlitze in den triloben Bereichen gemäß der EP 1 182 372 B1 vorgesehen, ist zwischen diesen eine freistehende Rippe angeordnet, die, so das Material zu weich ausgebildet ist, dahin tendiert, bei Anordnung eines Binders und Befestigung desselben sich zu biegen, oder aber, wenn ein zu hartes Material vorgesehen ist, wiederum zu einem möglichen Bruch des Binders bei Befestigung desselben führen kann.

Aufgabe der vorliegenden Erfindung ist es daher, einen Faltenbalg zur Verfügung zu stellen, der der Anordnung an einem Gelenkgehäuse mit einer triloben Außenkontur dient und die aus dem Stand der Technik bekannten Probleme vermeidet.

Diese Aufgabe wird erfindungsgemäß gelöst durch einen Faltenbalg der eingangs genannten Art, wobei der erste Befestigungsbereich weiterhin einen Bindersitzbereich mit einer Bindersitzbereichoberfläche und mit einer dieser gegenüberliegend angeordneten Unterseite umfasst, wobei in den Verbindungsbereichen der erste Befestigungsbereich eine geringere Materialstärke aufweist als in den loben Bereichen und/oder Führungsbereichen, wobei in den loben Bereichen und/oder den Führungsbereichen auf der Unterseite mindestens eine Innennut angeordnet ist, wobei die Innennut zu einer Mitte der loben Bereiche hin eine zunehmende Tiefe aufweist. Soweit auf der Unterseite mehr als eine Innennut angeordnet ist, verlaufen die Innennuten im Wesentlichen parallel zueinander. Besonders bevorzugt ist auf der Unterseite genau eine Innennut angeordnet.

Die Erfinder haben erkannt, dass vorteilhafterweise durch die Vorsehung mindestens einer Innennut auf der Unterseite des ersten Bindersitzbereiches in den loben Bereichen und/oder in den Führungsbereichen Bruchprobleme eingesetzter Binder als auch Dichtigkeitsprobleme vermieden werden. Bevorzugt ist die mindestens eine Innennut in den loben Bereichen und/oder in den Führungsbereichen auf der Unterseite des ersten Bindersitzbereiches angeordnet. Weiter bevorzugt ist die mindestens eine Innennut nicht in den Verbindungsbereichen angeordnet. In einer bevorzugten Ausführungsform des erfindungsgemäßen Faltenbalges weist damit die Unterseite des ersten Befestigungsbereiches Innennuten in Form von Nutabschnitten in den loben Bereichen und/oder in den Führungsbereichen auf, wobei weiter bevorzugt genau eine Innennut in einem jeden loben Bereich und/oder in einem jeden Führungsbereich vorgesehen ist. Bevorzugt ist die mindestens eine Innennut damit nicht als auf der Unterseite des ersten Befestigungsbereiches in Umfangsrichtung umlaufende Nut in Form einer Ringnut ausgebildet. Ist die mindestens eine Innennut in Form von Nutenabschnitten nur in den loben Bereichen und/oder in den Führungsbereichen, bevorzugt in beiden Bereichen, ausgebildet, verlaufen die einzelnen Nutenabschnitte der mindestens einen Innennut in einer gemeinsamen Ebene, die durch einen Innennutengrund der mindestens einen Nut verläuft, d. h. die einzelnen Nutenabschnitte der mindestens einen Innennut sind in Umfangsrichtung des ersten Bindersitzbereiches umlaufend nacheinander folgend angeordnet. Würden diese Nutenabschnitte der mindestens einen Innennut über die Verbindungsbereiche miteinander verbunden werden, würde eine ringförmig umlaufende Innennut, wie in einer alternativen Ausführungsform der vorliegenden Erfindung vorgesehen, vorliegen. In den Verbindungsbereichen kann die Innennut eine andere Querschnittsform aufweisen als in den loben Bereichen und/oder in den Führungsbereichen.

Erfindungsgemäße Faltenbalge können z. B. drei lobe Bereiche und drei diese verbindende Verbindungsbereiche aufweisen. Es können aber auch z. B. drei lobe Bereiche und drei Führungsbereiche vorgesehen sein, die miteinander über sechs Verbindungsbereiche verbunden sind.

Die loben Bereiche des ersten Befestigungsbereiches des erfindungsgemäßen Faltenbalges weisen auf der Innenseite desselben Materialverstärkungen auf mit einer radialen Kontur, die den am triloben Gelenkgehäuse angeordneten, in Richtung einer Welle verlaufenden Ausnehmungen (radialen Vertiefungen) angepasst sind. Führungsbereiche hingegen weisen auf der dem Gelenkgehäuse zugewandten Innenseite des ersten Befestigungsbereiches zwar ebenfalls Materialverstärkungen auf, die jedoch eine lineare Kontur aufweisen. Mindestens eine Innennut kann in einer bevorzugten Ausführungsform nur in den loben Bereichen, in einer anderen bevorzugten Ausführungsform in den loben Bereichen und den Führungsbereichen vorgesehen sein, weiter bevorzugt jeweils genau eine Innennut. Alternativ kann mindestens eine, bevorzugt genau eine, Innennut nur in den Führungsbereichen vorgesehen sein. In den Verbindungsbereichen weist der erste Befestigungsbereich eine geringere, bevorzugt dabei gleichbleibende, Materialstärke auf als in den lobalen Bereichen und/oder den Führungsbereichen.

Der Faltenbereich des erfindungsgemäßen Faltenbalges kann mindestens eine Falte aufweisen, die eine Faltenspitze und ein dem ersten Befestigungsbereich und ein dem zweiten Befestigungsbereich zugewandtes Faltental aufweist, wobei zumindest auf das dem zweiten Befestigungsbereich zugewandten Faltental in aller Regel mindestens eine weitere Falte folgt. Der Faltenbereich kann dabei eine Mehrzahl von Falten aufweisen, beispielsweise zwei, drei, vier, fünf, sechs, sieben, acht oder mehr. Die Falten des Faltenbereiches können dabei von dem ersten Bindersitzbereich auf den zweiten Bindersitzbereich hin einen abnehmenden Durchmesser aufweisen, jedoch in Teilen auch einen gleichen Durchmesser. So können beispielsweise zunächst ein bis drei Falten mit einem auf dem zweiten Bindersitzbereich abnehmenden Durchmesser, bezogen auf deren Faltenspitzen, vorgesehen sein, auf welche dann zwei bis vier Falten mit einem identischen Durchmesser, bezogen auf die Faltenspitzen, folgen, wobei dann nachfolgend wiederum ein bis drei Falten mit einem abnehmenden Durchmesser, bezogen auf deren Faltenspitzen, bezogen auf den zweiten Befestigungsbereich hin vorgesehen sein können. Aber auch jede andere Ausbildung des Faltenbereiches ist möglich. Die Faltentäler können dabei eine jedwede Ausgestaltung aufweisen, beispielsweise können sie in Hinblick auf spezielle Anforderungen des erfindungsgemäßen Faltenbalges Unterteilungen in Form von Materialverstärkungen oder Materialschwächungen aufweisen, um das Biegeverhalten des Faltenbalges zu beeinflussen.

In einer bevorzugten Ausführungsform ist eine Materialstärke S1 des ersten Befestigungsbereiches, bestimmt zwischen der Bindersitzbereichoberfläche und einem Nutengrund der mindestens einen Innennut, in den loben Bereichen und/oder in den Führungsbereichen im Wesentlichen gleich ausgebildet. "Im Wesentlichen" bedeutet dabei, im Sinne der vorliegenden Erfindung, insbesondere bezogen auf Materialstärken, dass die jeweiligen Materialstärken in den loben Bereichen und/oder in den Führungsbereichen um nicht mehr als etwa +/-20 %, bevorzugt nicht mehr als etwa +/- 10 %, noch weiter bevorzugt nicht mehr als etwa +/- 5 %, und noch weiter bevorzugt nicht mehr als etwa +/- 2 %, voneinander abweichen. In dieser vorteilhaften Ausführungsform verhält sich vorteilhafterweise das vorhandene Material des ersten Befestigungsbereiches oberhalb der mindestens einen Innennut in den loben Bereichen und/oder in den Führungsbereichen bei angreifenden Kräften durch Schließung eines Binders im Wesentlichen gleich, d. h. dass ein homogenes Verhalten in den loben Bereichen und/oder in den Führungsbereichen, die eine größere Materialstärke als die Verbindungsbereiche aufweisen, erzielbar ist.

Bevorzugt ist die mindestens eine Innennut, bezogen auf einen Querschnitt durch den ersten Bindersitzbereich, wobei der Querschnitt definiert ist durch eine Hauptachse des erfindungsgemäßen Faltenbalges umfassende und durch den ersten Befestigungsbereich und den zweiten Befestigungsbereich verlaufende Fläche, in etwa mittig auf der Unterseite des ersten Bindersitzbereiches angeordnet. Sind mehr als mindestens eine Innennut vorgesehen, ist bei einer ungeraden Anzahl bevorzugt eine der Innennuten ebenfalls wie vorstehend beschrieben mittig angeordnet. Ist eine gerade Anzahl von Innennuten vorgesehen, ist hingegen bevorzugt vorgesehen, dass die gerade Anzahl an Innennuten gleichmäßig an der Unterseite des ersten Befestigungsbereiches angeordnet ist, wobei diese bevorzugt symmetrisch zu einer den ersten Befestigungsbereich senkrecht zu dem vorgenannten Querschnitt teilenden Fläche an der Unterseite desselben angeordnet sind.

In einer weiter bevorzugten Ausführungsform sind ausgehend von der Bindersitzbereichoberfläche in den loben Bereichen und/oder in den Führungsbereichen mindestens zwei im Wesentlichen parallel zueinander verlaufende Außennuten angeordnet. Die mindestens zwei Außennuten sind bevorzugt im Wesentlichen parallel zueinander angeordnet und weisen, so diese nicht als umlaufende Ringnuten ausgebildet sind, weiter bevorzugt eine in etwa gleiche Länge in den loben Bereichen und/oder den Führungsbereichen auf. Im Sinne der vorliegenden Erfindung können nicht nur zwei, sondern auch drei, vier oder mehr derartige Außennuten vorgesehen sein. Dabei weisen die mindestens zwei Außennuten einen parabolischen Querschnitt auf, bevorzugt weisen sämtliche der im Bindersitzbereich des ersten Befestigungsbereiches angeordneten Außennuten, die ausgehend von der Bindersitzbereichoberfläche dort angeordnet sind, d. h. zur Bindersitzbereichoberfläche des Bindersitzbereiches des ersten Befestigungsbereiches hin offen sind, in den loben Bereichen und in den Führungsbereichen einen parabolischen Querschnitt auf.

Durch die mindestens zwei Außennuten wird vorteilhafterweise erreicht, dass auf den ersten Bindersitzbereich wirkende Kräfte gleichmäßiger übertragen werden, was insbesondere durch eine nähergehende Ausgestaltung dieser Außennuten, wie weiter unten beschrieben, unterstützt ist. Aufgrund der Vorsehung der mindestens zwei Außennuten kann eine gleichmäßigere Verteilung der Materialdicke innerhalb des ersten Bindersitzbereiches in den loben Bereichen und/oder in den Führungsbereichen erzielt werden, die letztendlich ein Brechen von Bindern bei deren Befestigung unterbinden kann. Der erfindungsgemäße Faltenbalg kann jedoch auch keine Außennuten, sondern nur mindestens eine Innenut, bevorzugt genau eine Innennut, aufweisen. In einer bevorzugten Ausführungsform des erfindungsgemäßen Faltenbalges weist dieser eine Innenut in den loben Bereichen und mindestens zwei Außennuten auf. In einer weiter bevorzugten Ausführungsform weisen zusätzlich zu der zuvor genannten Ausführungsform auch die Führungsbereiche eine Innennut auf. In zwei alternativen Ausführungsformen zu den vorstehenden zwei bevorzugten Ausführungsformen weisen diese keine Außennuten auf.

In einer weiter bevorzugten Ausführungsform sind, in einem Querschnitt, definiert wie vorstehend beschrieben, durch eine eine die Hauptachse des Faltenbalges umfassende und durch den ersten Befestigungsbereich und den zweiten Befestigungsbereich verlaufende Fläche, die mindestens eine Innennut und/oder die mindestens zwei Außennuten in den loben Bereichen und/oder in den Führungsbereichen im Wesentlichen parabolisch ausgebildet. Sollte die mindestens eine Innennut und/oder die mindestens zwei Außennuten als Ringnuten ausgebildet sein, können diese auch in den Verbindungsbereichen im Wesentlichen parabolisch ausgebildet sein, sind es dort aber weiter bevorzugt nicht.

Parabolisch ausgebildete Nuten im Sinne der vorliegenden Erfindung sind solche Nuten, die im Querschnitt des erfindungsgemäßen Faltenbalges durch eine Ebene, die durch den ersten und den zweiten Befestigungsbereich entlang und in einer gedachten Mittelachse des Faltenbalges verläuft, parabelförmig im mathematischen Sinne ausgebildet sind. Dies bedeutet, dass die Form der Nuten des erfindungsgemäßen Faltenbalges als Schnitt eines geraden Kreiskegels in einer Ebene, die parallel zu einer Mantellinie verläuft und nicht durch die Kegelspitze geht, charakterisiert ist. Die Nuten des erfindungsgemäßen Faltenbalges weisen eine Innenwandung auf, die radial ausgebildet ist. Die sich gegenüberliegenden Wandungen der Innenwandung sind im Wesentlichen spiegelsymmetrisch ausgebildet in Bezug auf eine Ebene, die senkrecht zu der vorstehend genannten Ebene durch einen Grund der Nuten verläuft. Der Nutengrund selbst weist keine ebenen, sondern ausschließlich radiale Abschnitte auf. Insbesondere weist der Nutengrund keinerlei Bereiche auf, die im Wesentlichen parallel zu der Bindersitzbereichoberfläche und der entgegengesetzt angeordneten Unterseite des ersten Befestigungsbereiches ausgebildet sind. Ausnahme ist eine Tangente, die durch die Nutengründe verläuft. Aufgrund der parabolischen Ausbildung der mindestens einen Innennut und/oder der mindestens zwei Außennuten wird nicht nur eine gleichmäßigere Verteilung angreifender Kräfte aufgrund Befestigung eines Binders erzielt, es wird auch verhindert, dass zwischen zwei solcher Innennuten und/oder Außennuten angeordnetes Material, welches dann als rippenförmig ausgebildet beschrieben werden kann, bei Befestigung des Binders nachgibt durch Wegbiegen oder gar Wegbrechen.

Besonders bevorzugt weist ein zwischen den mindestens zwei Außennuten angeordnetes Material des Bindersitzbereiches auf halber Tiefe der Außennuten in den loben Bereichen und/oder den Führungsbereichen eine Dicke Dₐ auf, die etwa 85 % bis etwa 115 %, bevorzugt etwa 90 % bis etwa 110 %, noch weiter bevorzugt etwa 93 % bis etwa 106 %, einer Dicke D_{b} entspricht, bestimmt zwischen einer Außenwand und einer Innenwand des ersten Bindersitzbereiches und der diesen zugewandten Nutenwand an den mindestens zwei der Außenwand und der Innenwand benachbart angeordneten Außennuten auf halber Tiefe.

Eine im Wesentlichen gleichbleibende Materialstärke in den Bereichen auf halber Tiefe führt dazu, dass eine homogenere Kraftverteilung bei Befestigung eines Binders erzielt wird, als auch, dass ein mögliches Abbiegen von zwischen zwei Außennuten angeordneten Materiales, wie aus dem Stand der Technik bekannt, vermieden wird. Hierzu trägt auch die parabolische Ausbildung der Außennuten und Innennuten selbst bei. Das Material zwischen zwei Nuten weist eine ausgehend von der Bindersitzbereichoberfläche beziehungsweise der Unterseite des ersten Bindersitzbereiches eine Verbreiterung im Bereich der Nutengründe auf. Dieses Material kann als rippenförmig ausgebildet angesprochen werden kann.

In einer weiter bevorzugten Ausführungsform weisen die mindestens eine Innennut und/oder die mindestens zwei Außennuten in den loben Bereichen und/oder in den Führungsbereichen unterschiedliche Tiefen T auf. Besonders bevorzugt weisen die mindestens eine Innennut und/oder die mindestens zwei Außennuten zu der Mitte der loben Bereiche und/oder der Führungsbereiche hin eine zunehmende Tiefe auf.

Unter unterschiedlicher oder variierender Tiefe in Bezug auf die mindestens eine Innennut und die mindestens zwei Außennuten im Sinne der vorliegenden Erfindung ist zu verstehen, dass innerhalb der loben Bereiche und/oder der Führungsbereiche die Tiefe einer Nut von einem Ende eines loben Bereiches oder eines Führungsbereiches, gesehen in Umfangsrichtung des ersten Befestigungsbereiches, zur Mitte des loben Bereiches beziehungsweise des Führungsbereiches zunimmt und danach zum gegenüberliegenden Ende des loben Bereiches beziehungsweise des Führungsbereiches, wiederum in Umfangsrichtung gesehen, abnimmt. Durch eine unterschiedliche Tiefe, insbesondere eine wie vorstehend als bevorzugt beschriebene Ausgestaltung der mindestens einen Innennut und/oder der mindestens zwei Außennuten in Bezug auf deren Nutengrund, insbesondere bei einer stetigen Ausbildung desselben, wird vorteilhafterweise eine Stärke des Materiales des ersten Befestigungsbereiches unterhalb der mindestens zwei Außennuten beziehungsweise oberhalb der mindestens einen Innennut im Wesentlichen gleich gehalten, so dass durch die Befestigung eines Binders angreifende Kräfte am ersten Befestigungsbereich gleichmäßig übertragen werden können.

In einer weiter bevorzugten Ausführungsform des erfindungsgemäßen Faltenbalges ist in der mindestens einen Innennut und/oder den mindestens zwei Außennuten mindestens eine Verstärkungsrippe, bevorzugt jeweils genau eine Verstärkungsrippe, angeordnet. Diese Verstärkungsrippen dienen der Verfestigung des Materiales im ersten Befestigungsbereich aufgrund der insbesondere in den loben Bereichen vorhandenen großen Tiefen der mindestens zwei Nuten. Hierdurch wird insbesondere eine Verbiegung von zwischen mindestens zwei Außennuten oder zwischen Innennuten und Außennuten angeordnetem Material, insbesondere rippenförmig ausgebildeten, vermieden. Die Verstärkungsrippen greifen bevorzugt an den sich gegenüberliegenden Nutenwänden an und sind mit diesen bevorzugt einteilig verbunden. Weiter bevorzugt weisen die Verstärkungsrippen eine Höhe auf, welche maximal der Tiefe der jeweiligen Nuten entspricht. Bevorzugt sind die Verstärkungsrippen vom Nutengrund bis zur Bindersitzbereichoberfläche beziehungsweise zur Unterseite hin ausgebildet, können jedoch auch etwas unterhalb der Bindersitzbereichoberfläche beziehungsweise der Unterseite beziehungsweise deren Oberfläche enden. In einer besonders bevorzugten Ausführungsform ist zumindest eine der Verstärkungsrippen radial ausgerichtet. Radial ausgerichtet heißt in diesem Sinne, dass diese Verstärkungsrippe im Wesentlichen gradlinig verlaufend vom ersten Befestigungsbereich auf eine gedachte Mittelachse des erfindungsgemäßen Faltenbalgs hin ausgebildet ist. In einer weiter bevorzugten Ausführungsform ist vorgesehen, dass zumindest eine der Verstärkungsrippen winklig zu einer radialen Ausrichtung ausgebildet ist. Dies bedeutet, dass eine durch diese weitere winklig ausgebildete Verstärkungsrippe, welche geradlinig ausgebildet ist, verlaufende Gerade nicht den Mittelpunkt des Faltenbalges, in dem die gedachte Hauptachse des Balges verläuft, durchstößt. Bevorzugt weist der erfindungsgemäße Faltenbalg mindestens zwei Verstärkungsrippen auf, die radial ausgerichtet sind, wobei bevorzugt eine radial ausgerichtete Verstärkungsrippe in einem loben Bereich und eine weitere radial ausgerichtete Verstärkungsrippe in einem Führungsbereich angeordnet ist, wobei weiter bevorzugt der lobe Bereich und der Führungsbereich mit der radial ausgerichteten Verstärkungsrippe gegenüberliegend angeordnet sind. Die vorstehende Ausbildung gilt bevorzugt sowohl bei der mindestens einen Innennut als auch bei den mindestens zwei Außennuten. Die übrigen zwei loben Bereiche und zwei Führungsbereiche weisen hingegen bevorzugt winklig ausgebildete Verstärkungsrippen in der mindestens einen Innennut und/oder den mindestens zwei Außennuten auf, die weiter bevorzugt auch nicht in Ihrer geradlinigen Erstreckung ineinander fallen, sondern selbst zueinander unterschiedlich ausgebildet sind. Dabei können paarweise identische Winkel für gegenüberliegende lobe Bereiche und Führungsbereiche vorgesehen sein. Die Winkel liegen dabei bevorzugt in einem Bereich zwischen etwa 35° und etwa 80°, weiter bevorzugt in einem Bereich von etwa 40° bis etwa 78°, bezogen auf eine Radiale, die die gedachte, durch den Mittelpunkt des Balges verlaufende Hauptachse auf dem kürzesten Wege mit dem ersten Befestigungsbereich verbindet.

In einer weiter bevorzugten Ausführungsform ist die mindestens eine Innennut und/oder die mindestens zwei Außennuten als Ringnuten ausgebildet. In den Verbindungsbereichen weisen die Ringnuten bevorzugt eine nur geringe Tiefe auf. Bevorzugt weisen dort die Nuten eine gleichmäßige, d. h. nicht variierende Tiefe auf. In einer bevorzugten Ausführungsform ist die mindestens eine Innennut, genau eine Innennut, in einem jeden loben Bereich und, soweit vorhanden, in einem jeden Führungsbereich oder nur in den loben Bereichen angeordnet und die mindestens zwei Außennuten, bevorzugt genau zwei Außennuten, sind als Ringnuten ausgebildet. In einer alternativen Ausführungsform ist die mindestens eine Innennut, genau eine Innennut, als auch die mindestens zwei Außennuten, genau zwei Außennuten, nur in einem jeden der loben Bereiche und, soweit vorhanden, in einem jeden der Führungsbereiche oder nur in den loben Bereichen angeordnet. In einer weiteren alternativen Ausführungsform weist der erfindungsgemäße Faltenbalg nur eine Innennut auf, die in einem jeden der loben Bereiche und, soweit vorhanden, in einem jeden der Führungsbereiche oder nur in den loben Bereichen angeordnet ist, jedoch keine Außennuten. Soweit die mindestens eine Innennut und/oder die mindestens zwei Außennuten nur in loben Bereichen und/oder Führungsbereichen angeordnet und daher nicht als Ringnuten ausgebildet sind, gilt das vorstehend bereits ausgeführte, nämlich dass die einzelnen dazugehörigen Nutenabschnitte zusammenfassend als mindestens eine Innennut beziehungsweise mindestens zwei Außennuten im Sinne der vorliegenden Erfindung definiert sind. Dabei liegen die jeweiligen Abschnitte der mindestens einen Innennut beziehungsweise der mindestens zwei Außennuten auf einer gemeinsamen Ebene durch die jeweiligen Nutengründe, d. h. sie sind in Umfangsrichtung des ersten Befestigungsbereiches gesehen, unterbrochen durch die Verbindungsabschnitte, aufeinanderfolgend angeordnet.

In einer weiter bevorzugten Ausführungsform ist in einem Querschnitt wie weiter oben definiert die mindestens eine, auf der Unterseite des ersten Befestigungsbereiches angeordnete Innennut zwischen den mindestens zwei, ausgehend von der Bindersitzbereichoberfläche angeordneten Außennuten angeordnet. Ist genau eine Innennut vorgesehen, ist diese wie bereits vorstehend beschrieben im Wesentlichen mittig, bezogen auf den weiter oben definierten Querschnitt des ersten Befestigungsbereiches, im Bindersitzbereich angeordnet. Weiter bevorzugt sind dann die mindestens zwei Außennuten, bevorzugt genau zwei Außennuten, bezogen auf den oben definierten Querschnitt des ersten Bindersitzbereiches beidseitig der Innennut angeordnet, wobei bevorzugt die jeweiligen Nutengründe nicht gegenüberliegend oder aber im Bereich einer Basis der jeweiligen Nuten, definiert durch deren Öffnung zur Bindersitzbereichoberfläche beziehungsweise zur Unterseite hin, angeordnet sind.

In einer weiter bevorzugten Ausführungsform ist eine Materialstärke S2 des ersten Befestigungsbereiches unterhalb der mindestens zwei Außennuten in den loben Bereichen und/oder in den Führungsbereichen zwischen deren Nutengründen und der Unterseite des ersten Befestigungsbereiches im Wesentlichen gleich. Hier gilt dasjenige in Hinblick auf die Definition von "im Wesentlichen", was bereits vorstehend im Zusammenhang mit der mindestens einen Innennut betreffend die Materialstärke S1 ausgeführt wurde. Durch diese bevorzugte Ausbildung ist ein homogenes Verhalten in den loben Bereichen und/oder in den Führungsbereichen, die beide eine größere Materialstärke als die Verbindungsbereiche aufweisen, erzielbar bei Schließung eines Binders aufgrund der hierdurch angreifenden Kräfte.

In einer weiter bevorzugten Ausführungsform sind an der Unterseite des ersten Befestigungsbereiches mindestens zwei Dichtlippen angeordnet. Bevorzugt sind mindestens drei, mindestens vier, mindestens fünf, mindestens sechs oder mehr Dichtlippen angeordnet. Die Dichtlippen sind bevorzugt als umlaufende Ringlippen ausgebildet. Die Dichtlippen verlaufen im Wesentlichen parallel zueinander. Weiter bevorzugt weisen die Dichtlippen, im Querschnitt entlang einer Ebene durch die Hauptachse des Faltenbalges gesehen, die den ersten Befestigungsbereich und den zweiten Befestigungsbereich verbindet, eine im Wesentlichen identische Form auf. Die Querschnittsform ist dabei besonders bevorzugt in etwa dreieckig, kann jedoch auch als halbrund oder mit sonstigen radialen Bereichen ausgebildet sein. Im Falle einer in etwa dreieckigen Querschnittsform ist insbesondere der Spitzenbereich des Dreieckes, der auf eine gedachte Oberfläche einer Gelenknut hin ausgerichtet ist, etwas abgerundet ausgebildet. Nebeneinander angeordnete Dichtlippen weisen im Wesentlichen eine gleiche Höhe auf, ausgehend von der Unterseite des ersten Befestigungsbereiches.

In einer bevorzugten Ausführungsform sind die Dichtlippen im Wesentlichen innerhalb des durch die mindestens zwei Außennuten definierten Bereiches in den loben Bereichen und den Führungsbereichen angeordnet. Dieser durch die Außennuten definierte Bereich ist definiert durch diejenige Breite der Bindersitzbereichoberfläche, die sich ausgehend von der einer Außenwand des ersten Befestigungsbereiches nächsten Nutenwand bis zu der einer Innenwand des ersten Befestigungsbereiches zugewandten Nutenwand der dort nächsten Außennut hin erstreckt. Es kann vorgesehen sein, dass die Dichtlippen genau unterhalb eines Nutengrundes einer jeder der Außennuten angeordnet sind, oder aber paarweise in Umfangsrichtung versetzt auf beiden Seiten des Nutengrundes. Auch im Bereich von zwischen zwei Außennuten gebildeten Materialanhäufungen, die in aller Regel rippenförmig ausgebildet sind, insbesondere bei Vorsehung von mehr als zwei Außennuten, können Dichtlippen vorgesehen sein, bevorzugt genau eine.

In einer weiter bevorzugten Ausführungsform sind in den Verbindungsbereichen des ersten Befestigungsbereiches auf dessen Unterseite zwei Positionierungsrippen angeordnet. Bevorzugt sind zwischen den Positionierungsrippen die mindestens zwei Dichtlippen angeordnet. Bevorzugt weisen die beiden Positionierungsrippen einen Abstand voneinander auf, der im Wesentlichen der Gelenknut an einem Gelenkgehäuse entspricht, auf welchem der erfindungsgemäße Faltenbalg angeordnet wird. Bevorzugt sind die beiden Positionierungsrippen ausschließlich in den Verbindungsbereichen angeordnet. Diese weisen weiter bevorzugt eine Länge auf, die im Wesentlichen einer radialen Erstreckung der Führungsbereiche entspricht oder aber etwas geringer als diese ist. Durch die Vorsehung der beiden Positionierungsrippen, die, in einem Querschnitt betrachtet, der durch die gedachte Hauptachse des erfindungsgemäßen Faltenbalges verläuft und eine Ebene zwischen dem ersten Befestigungsbereich und dem zweiten Befestigungsbereich umfasst, die mindestens beiden Dichtlippen von beiden Seiten umfassen, ermöglicht, dass weitere Positionierungshilfen, welche oftmals im Bereich des Übergangs vom ersten Befestigungsbereich auf den Faltenbereich vorgesehen sind, überflüssig werden. Vorteilhafterweise kann hierdurch erreicht werden, dass eine erste Falte des Faltenbereiches, welche benachbart dem ersten Befestigungsbereich ist, mit einem größeren Durchmesser ausgebildet werden kann, bezogen auf deren Faltenspitze.

Weiter bevorzugt weicht ein Querschnittsprofil der Dichtlippen und der Positionierungsrippen voneinander ab. Das Querschnittsprofil ist bezogen auf eine durch den ersten Befestigungsbereich und den zweiten Befestigungsbereich verlaufende Ebene, die die gedachte Hauptachse des erfindungsgemäßen Faltenbalges schneidet. Im Unterschied zu dem bereits weiter oben beschriebenen Querschnittsprofil der Dichtlippen weisen vorzugsweise die Positionierungsrippen eine zwar im Wesentlichen dreieckige Querschnittsform auf. Bevorzugt ist dabei die Basis des Dreieckes, die sich an der Unterseite des ersten Befestigungsbereiches befindet, breiter ausgebildet als die Basis der Dichtlippen. Weiter bevorzugt ist eine Höhe der Positionierungsrippen etwas geringer als eine Höhe der Dichtlippen. Bevorzugt befinden sich die Positionierungsrippen außerhalb des durch die mindestens zwei Nuten definierten Bereiches und damit nicht unterhalb derselben, wie dies bei den Dichtlippen der Fall ist.

Soweit in der vorliegenden Erfindung der Begriff "etwa" in Bezug auf Werte, Wertbereiche oder werthaltige Begriffe verwendet wird, ist hierunter dasjenige zu verstehen, was der Fachmann in dem gegebenen Zusammenhang als fachmännisch üblich ansehen wird. Insbesondere sind Abweichungen der angegebenen Werte, Wertbereiche oder werthaltigen Begriffe von +/- 10 %, bevorzugt +/- 5 %, weiter bevorzugt +/- 2 %, von dem Begriff "etwa" umfasst.

Die vorliegende Erfindung betrifft auch einen Faltenbalg der eingangs genannten Art, bei dem in den Verbindungsbereichen zwei Positionierungsrippen angeordnet sind, zwischen denen mindestens zwei Dichtlippen, die umlaufend auf einer Unterseite des ersten Befestigungsbereiches angeordnet sind, angeordnet sind. Die zwei Positionierungsrippen weisen dabei vorteilhafterweise diejenigen näheren Ausgestaltungen auf wie vorstehend beschrieben. In weiteren bevorzugten Ausführungen eines solchen alternativen Faltenbalges weist dieser diejenigen sonstigen Ausgestaltungen auf, die vorstehend beschrieben sind, also insbesondere die mit einer Innennut und/oder mit mindestens zwei Außennuten zumindest in den loben Bereichen und/oder in den Führungsbereichen und die mit diesen zusammenhängenden näheren Ausgestaltungen derselben, als auch diejenigen des ersten Bindersitzbereiches. Auch weist dieser alternative Faltenbalg bevorzugt die mindestens zwei Dichtlippen in Ausgestaltungen auf wie vorstehend beschrieben.

Die vorliegende Erfindung betrifft weiterhin die Verwendung eines erfindungsgemäßen Faltenbalges wie vorstehend definiert zur Abdichtung einer Gelenk-Welle-Verbindung, bevorzugt eines Gleichlaufgelenkes. Des Weiteren betrifft die vorliegende Erfindung eine Gelenk-Welle-Verbindung mit einem erfindungsgemäßen Faltenbalg wie weiter oben beschrieben. Bevorzugt ist die Gelenk-Welle-Verbindung ein Gleichlaufgelenk. Der erfindungsgemäße Faltenbalg kann auf diesem vormontiert sein mit einem noch nicht festgezogenen Binder, der im ersten Befestigungsbereich jedoch bereits angeordnet ist. Bevorzugt ist bei der erfindungsgemäßen Gelenk-Welle-Verbindung die Innenkontur des erfindungsgemäßen Faltenbalges der Außenkontur des Gelenkgehäuses angepasst. Der erste Befestigungsbereich des erfindungsgemäßen Faltenbalges wirkt dabei insbesondere mit einer nahe der Gelenkgehäusekante angeordneten umlaufenden Gelenknut auf der Außenseite des Gelenkgehäuses zusammen.

Diese und weitere Vorteile der vorliegenden Erfindung werden anhand der nachfolgenden Figuren näher erläutert. Es zeigen:
- Fig. 1:: eine perspektivische Ansicht einer ersten Ausführungsform eines erfindungsgemäßen Faltenbalges;
- Fig. 2:: eine Schnittansicht entlang eines Schnittes I-I gemäß Fig. 6;
- Fig. 3:: eine Seitenansicht der ersten Ausführungsform des Faltenbalges;
- Fig. 4:: eine Schnittansicht entlang eines Schnittes III-III gemäß Fig. 2;
- Fig. 5:: eine Einzelheit III.I der Fig. 4 betreffend die Ausbildung des Verbindungsbereiches;
- Fig. 6:: eine Schnittansicht entlang eines Schnittes II-II gemäß Fig. 2;
- Fig. 7a:: eine Einzelheit II.I betreffend einen Führungsbereich der ersten Ausführungsform des erfindungsgemäßen Faltenbalges;
- Fig. 7b:: eine Einzelheit II.II betreffend einen loben Bereich der ersten Ausführungsform des erfindungsgemäßen Faltenbalges;
- Fig. 8a:: eine Einzelheit gemäß Fig. 7a mit skizzenhafter Verdeutlichung der Anordnung von Innennuten und Außennuten im Führungsbereich; und
- Fig. 8b:: die Einzelheit gemäß Fig. 7b mit Verdeutlichung der Anordnung von Innen- und Außennuten im loben Bereich.

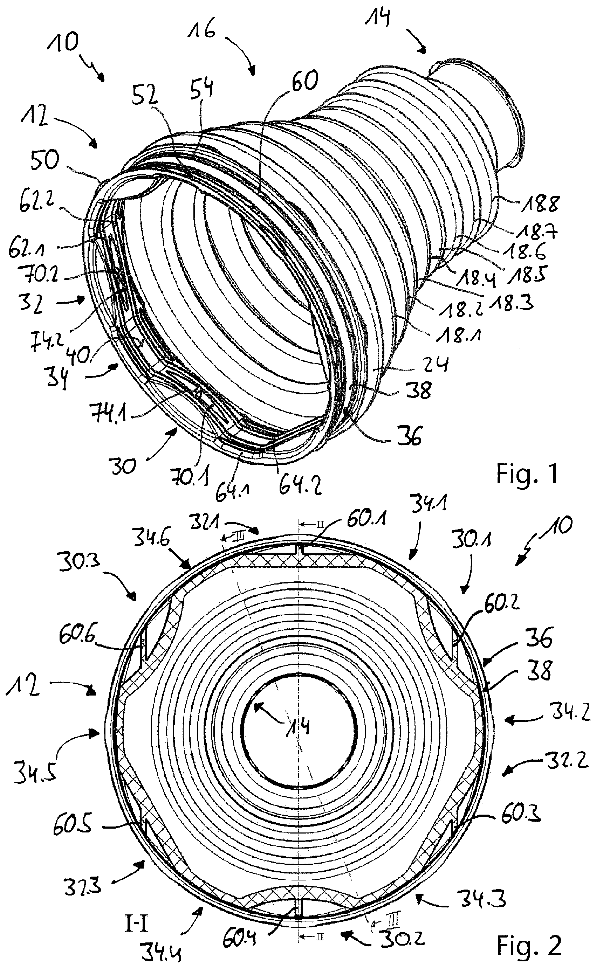

Zunächst sei vorausgeschickt, dass die in den Figuren dargestellten Ausführungsformen nicht beschränkend auszulegen sind. Vielmehr können die dort beschriebenen Merkmale untereinander und mit den zuvor beschriebenen Merkmalen zur weiteren Ausgestaltung kombiniert werden. So können beispielsweise in der ersten Ausführungsform des Faltenbalges 10 gemäß Fig. 1 auch mehr als zwei Dichtlippen 62.1 und 62.2 auf einer Innenseite 40 eines ersten Befestigungsbereiches 12 angeordnet sein. Auch können keine oder mehr als zwei parabolisch ausgebildete Außennuten 52 und 54 und mehr als eine Innennut 70 vorgesehen sein, beispielsweise drei oder vier. Auch kann die Parabolform der Außennuten 52 und 54 und der Innennut 70 von derjenigen in den Figuren gezeigten abweichen. Auch kann vorgesehen sein, dass keine umlaufenden Außennuten 52 und 54, d. h. Ringnuten, vorgesehen sind, sondern dass in den Verbindungsbereichen 34 die Außennuten 52 und 54 unterbrochen sind und aus jeweils drei oder sechs Nutenabschnitten bestehen. Dann liegen Nutenabschnitte der Nuten 52 und 54 nur in den loben Bereichen 30 und den Führungsbereichen 32 oder nur in den loben Bereichen 30 vor. Des Weiteren können auch keine Führungsbereiche 32 vorgesehen sein, so dass z. B. drei lobe Bereiche 30 und drei Verbindungsbereiche 34 vorliegen. Auch kann der Faltenbalg 10 in seinem Faltenbereich 16 mehr oder weniger oder aber anders ausgebildete Falten 18 aufweisen. Des Weiteren müssen Positionierungsrippen 64.1 und 64.2 nicht vorgesehen sein. Schließlich sei darauf hingewiesen, dass die in der Figurenbeschreibung und den Ansprüchen angegebenen Bezugszeichen den Schutz der vorliegenden Erfindung nicht beschränken, sondern lediglich auf die in den Figuren gezeigten Ausführungsformen verweisen.

Fig. 1 zeigt eine insgesamt mit dem Bezugszeichen 10 bezeichnete erste und einzige Ausführungsform, die in den Figuren gezeigt ist, eines Faltenbalges mit einem ersten Befestigungsbereich 12 und einem zweiten Befestigungsbereich 14 und einem zwischen diesen angeordneten Faltenbereich 16 mit insgesamt acht Falten 18.1 bis 18.8. Zwischen dem ersten Befestigungsbereich 12 und der ersten Falte 18.1 ist ein Übergangsbereich 24 angeordnet.

Der erste Befestigungsbereich 12 weist einen Bindersitzbereich 36 mit einer Bindersitzbereichoberfläche 38 auf, von welcher ausgehend zwei umlaufende, ringförmige Außennuten 52 und 54 angeordnet sind. Der erste Befestigungsbereich 12 weist dabei ohrförmige Vorsprünge 50 beidseitig des Bindersitzbereiches 36 auf, die einer vereinfachten Befestigung eines hier nicht gezeigten Binders dienen. Der Befestigungsbereich 12 weist weiterhin drei lobe Bereiche 30 und drei Führungsbereiche 32 als auch sechs Verbindungsbereiche 34, angeordnet zwischen loben Bereichen 30 und Führungsbereichen 32, auf. Die loben Bereiche 30 kommen in radialen Vertiefungen eines hier nicht gezeigten, entsprechend ausgebildeten triloben Gelenkaußenteils zu liegen und sind diesen radialen Vertiefungen des Gelenkaußenteils angeformt. Dies gilt entsprechend für die Führungsbereiche 32 mit einer zu einem Innern des Faltenbalges 10 hin ausgerichteten geradlinigen Außenkontur und entsprechend auch für die Verbindungbereiche 34. In den Verbindungsbereichen 34 sind Positionierungsrippen 64.1 und 64.2 erkennbar, zwischen denen zwei umlaufende, ringförmige Dichtlippen 62.1 und 62.2 angeordnet sind. In den loben Bereichen 30 sind Verstärkungsrippen 74.1 und in den Führungsbereichen 32 Verstärkungsrippen 74.2 angeordnet, jeweils genau eine. Diese sind radial ausgerichtet. Jedoch wäre eine andere Ausrichtung, z. B. eine winklige, wie dies nachfolgend in Hinblick auf Verstärkungsrippen 60.1 bis 60.6 zu Fig. 2 beschrieben ist, möglich. In einer bevorzugten Ausführungsform der Erfindung sind alle Verstärkungsrippen in der mindestens einen Innennut radial ausgerichtet. Weiter bevorzugt ist in einem jeden der loben Bereiche und/oder der Führungsbereiche bevorzugt genau eine Verstärkungsrippe in der mindestens einen Innennut angeordnet. In Fig. 1 zu erkennen sind ebenfalls Verstärkungsrippen 60, die in den Außennuten 52 und 54 angeordnet sind. Die Verstärkungsrippen 74.1 und 74.2 sind in einer nicht als Ringnut ausgebildeten Innennut mit Nutabschnitten 70.1 und 70.2 angeordnet. Diese Nutabschnitte 70.1 und 70.2 der Innennut liegen auf einer gemeinsamen Ebene, die die Gründe dieser Nutenabschnitte miteinander verbindet und sind am Innenumfang aufeinanderfolgend auf einer Innenseite 40 des ersten Befestigungsbereiches 12 angeordnet.

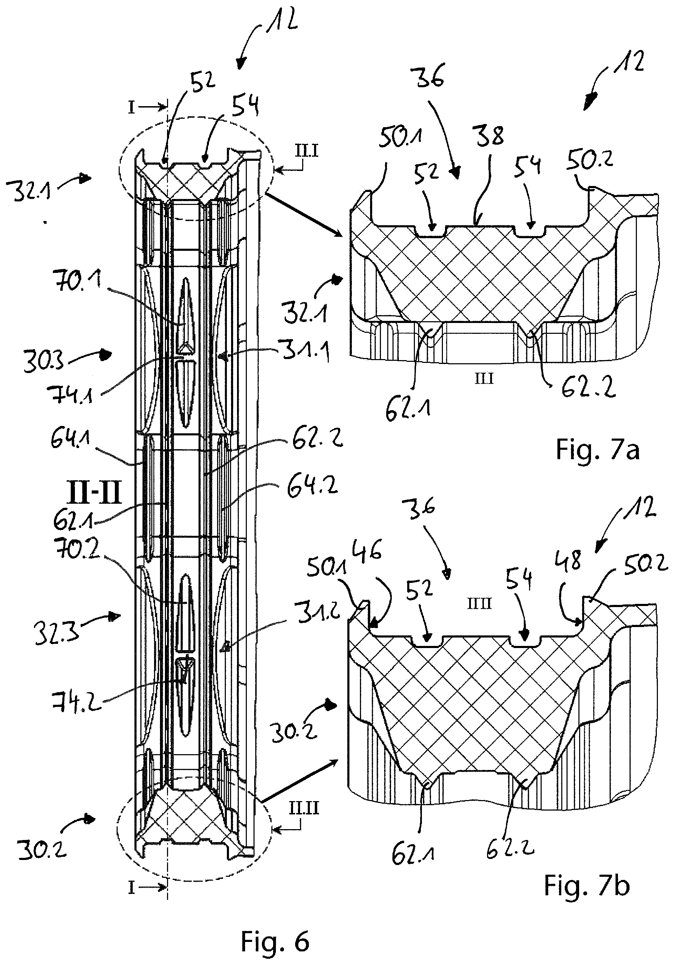

Fig. 2 zeigt nun einen Schnitt I-I der nachfolgenden Fig. 6, wobei Fig. 6 wiederum einen Schnitt II-II gemäß Fig. 2 zeigt. Der Schnitt I-I verläuft durch den Nutengrund der einen Außennut 52. Fig. 2 ist gut die unterschiedliche Materialstärke des Materiales im ersten Befestigungsbereiches 12 in den Verbindungsbereichen 34.1 bis 34.6 mit einer geringeren Materialstärke und den loben Bereichen 30.1 bis 30.3 als auch den Führungsbereichen 32.1 bis 32.3 mit in etwa gleicher Materialstärke zu entnehmen. Zudem sind auch Verstärkungsrippen 60.1 bis 60.6 zu erkennen. Dabei sind Verstärkungsrippe 60.1, angeordnet in dem Führungsbereich 32.1 und Verstärkungsrippe 60.4, angeordnet im loben Bereich 30.2, radial ausgerichtet, wobei der Führungsbereich 32.1 und der lobe Bereich 30.2 gegenüberliegend ausgebildet sind. Die weiteren Verstärkungsrippen 60.2, 60.3, 60.5 und 60.6 hingegen sind winklig zu einer radialen Ausrichtung ausgebildet. Die Verstärkungsrippe 60.1 und 60.2, die den loben Bereichen 30.1 und 30.3 zugeordnet sind, weisen dabei eine größere Länge auf als die in den Führungsabschnitten 32.2 und 32.3 angeordneten Verstärkungsrippen 60.3 und 60.5. Die benachbart angeordneten Verstärkungsrippen 60.2 und 60.3 einerseits und 60.5 und 60.6 andererseits liegen nicht auf einer gemeinsamen Geraden, sondern weisen zueinander auch unterschiedliche Abwinklungen auf.

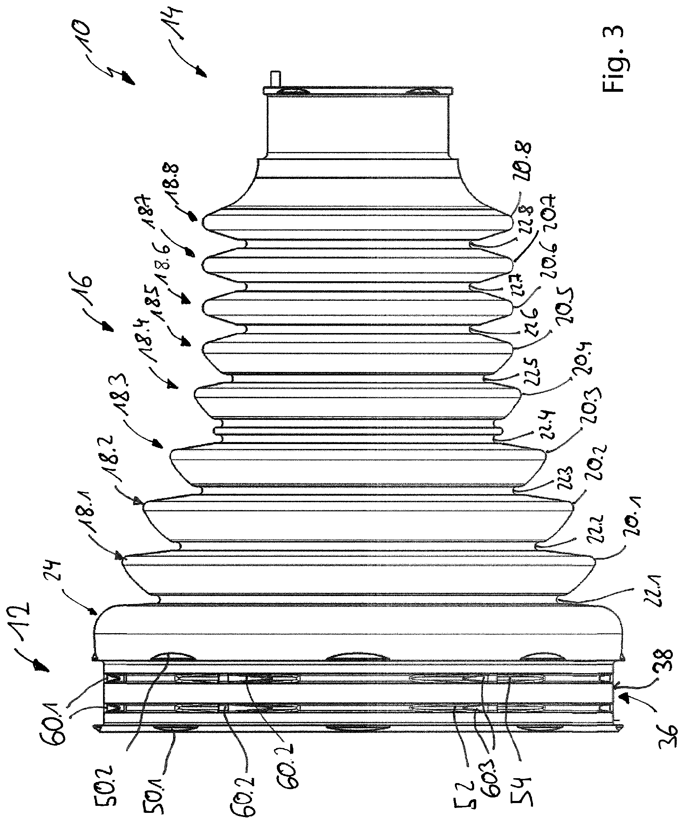

Aus Fig. 3 ist insbesondere die Ausgestaltung des Faltenbereiches 16 mit den Falten 18.1 bis 18.8 gut ersichtlich. Die Falten 18.1 bis 18.8 weisen Faltenspitzen 20.1 bis 20.8 auf. Der Faltenbereich 16 weist weiterhin Faltentäler 22.1 bis 22.8 auf. Die Falten 18.1 bis 18.4 weisen einen auf den zweiten Befestigungsbereich 14 abnehmenden Durchmesser auf, wohingegen die Falten 18.5 bis 18.8 einen in etwa identischen Durchmesser aufweisen. Zwischen den beiden Falten 18.3 und 18.4 ist im Faltental 24.4 eine Materialanhäufung zu erkennen, wodurch das Biegeverhalten des Faltenbalges 10 beeinflusst ist.

Des Weiteren ist Fig. 3 auch die Anordnung der ohrförmigen Vorsprünge 50.1 und 50.2 paarweise gegenüberliegend gut zu entnehmen, als auch die in den Außennuten 52 und 54, als Ringnuten ausgebildet, angeordneten Verstärkungsrippen 60.1, 60.2 und 60.3, wobei, da identisch ausgebildet, die paarweise gegenüberliegend angeordneten Verstärkungsrippen der beiden Außennuten 52 und 54 mit dem gleichen Bezugszeichen versehen sind.

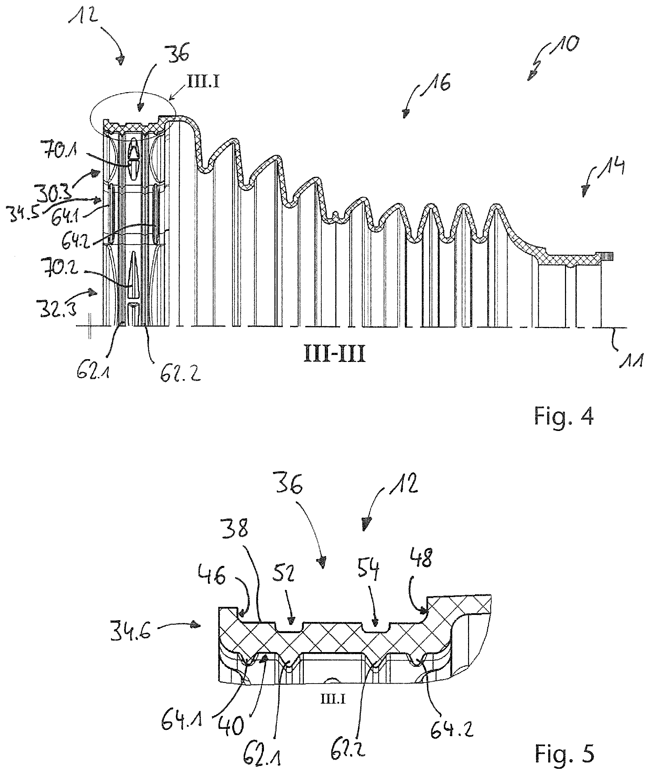

Fig. 4 zeigt nun einen Schnitt III-III gemäß Fig. 2, der durch die Verbindungsbereiche 34.3 und 34.6 verläuft, die eine geringere Materialstärke im ersten Befestigungsbereich 12 aufweisen. Gut ist der Faltenbereich 16, wie vorstehend in Hinblick auf Fig. 3 beschrieben, zu erkennen. Im ersten Befestigungsbereich 12 sind die Innennutabschnitte 70.1 und 70.2 der Innennut zu erkennen und deren Anordnung zwischen zwei umlaufenden ringförmigen Dichtlippen 62.1 und 62.2. In dem Verbindungsbereich 34.5 sind die beiden Positionierungsrippen 64.1 und 64.2, die sich im Wesentlichen über die gesamte Länge des Verbindungsbereiches 34.5 erstrecken, erkennbar. Die Innennutabschnitte 70.1 und 70.2 der Innennut sind im loben Bereich 30.3 und im Führungsbereich 32.3 angeordnet.

Fig. 5 zeigt die Einzelheit III.I der Fig. 4 betreffend einen Schnitt durch den Verbindungsbereich 34.6. Es ist zu erkennen, dass die beiden Außennuten 52 und 54 auch dort ausgebildet sind, mithin als umlaufende Ringnuten ausgebildet sind, jedoch nur eine geringe Tiefe aufweisen. Dabei sind diese insbesondere auch nicht parabolisch ausgebildet. Im Sinne der vorliegenden Erfindung kann jedoch auch vorgesehen sein, in den Verbindungsbereichen die Außennuten 52 und 54, soweit als umlaufende Ringnuten ausgebildet, parabolisch auszubilden.

Gegenüberliegend den Außennuten 52 und 54 sind auf der Unterseite 40 die Dichtlippen 62.1 und 62.2 angeordnet, die im Querschnitt zum Profil im Wesentlichen dreieckig ausgebildet sind. Diese liegen zwischen den Positionierungsrippen 64.1 und 64.2, die ein anderes Querschnittsprofil aufweisen als die Dichtlippen 62.1 und 62.2. Insbesondere weisen die Positionierungsrippen 64.1 und 64.2 eine geringere Höhe auf und eine stärkere Abrundung in ihrer freien Dreiecksspitze als die Dichtlippen 62.1 und 62.3. Fig. 5 ist auch eine Definition des Bindersitzbereiches 36 zu entnehmen, der definiert ist durch eine äußere Begrenzungswand 46 und eine innere Begrenzungswand 48, zwischen der sich die Bindersitzbereichoberfläche 38 erstreckt.

Fig. 6 zeigt den Schnitt II-II gemäß Fig. 2 durch den ersten Befestigungsbereich 12 durch dessen Führungsbereich 32.1 und dessen loben Bereich 30.2. Der Schnitt geht somit direkt durch die radial ausgerichteten Verstärkungsrippen 60.1 und 60.4, was besonders gut aus den Einzelheiten gemäß den Fig. 7a betreffend den Führungsbereich 32.1 und die Einzelheit gemäß Fig. 7b betreffend den loben Bereich 30.2 ersichtlich ist. Dort sind auch die Außennuten 52 und 54 nur mit geringer Tiefe ausgebildet, entsprechend einer Tiefe in den Verbindungsbereichen 34.1 bis 34.6, wie Fig. 5 entnommen werden kann, was gerade insbesondere die bevorzugte Ausführungsform dieser Erfindung darstellt. Im Bereich der Verstärkungsrippen, so solche vorgesehen sind, sind damit im Sinne der vorliegenden Erfindung die mindestens zwei Außennuten 52 und 54 nicht notwendigerweise parabolisch ausgebildet.

Fig. 6 ist zu entnehmen, dass beidseitig des loben Bereiches 70.3 als auch des Führungsbereiches 32.3 Rücksprünge 31.1 beziehungsweise 31.2 angeordnet sind. In diesen Bereichen ist somit das Material des ersten Befestigungsbereiches 12 vermindert. Hierdurch wird die Erzielung einer guten Dichtwirkung bei Befestigung eines hier nicht gezeigten Binders verbessert. Im Sinne der vorliegenden Erfindung sind Rücksprünge 31 bevorzugt beidseitig gegenüberliegend im ersten Befestigungsbereich 12 in den loben Bereichen 30 und/oder den Führungsbereichen 32 vorsehbar.

Ansonsten sind Fig. 6 der Innennutabschnitt 70.1 im loben Bereich 30.3 und der Innennutabschnitt 70.2 im Führungsbereich 32.3 mit jeweils mittig in diesen angeordneten radial ausgerichteter Verstärkungsrippe 74.1 beziehungsweise 74.2 zu erkennen. Im Sinne der vorliegenden Erfindung ist eine Länge der Innennutabschnitte 70.1 und 70.2 der Innennut im Wesentlichen gleich oder aber etwas geringer als eine Länge der loben Bereiche 30 und/oder der Führungsbereiche 32.

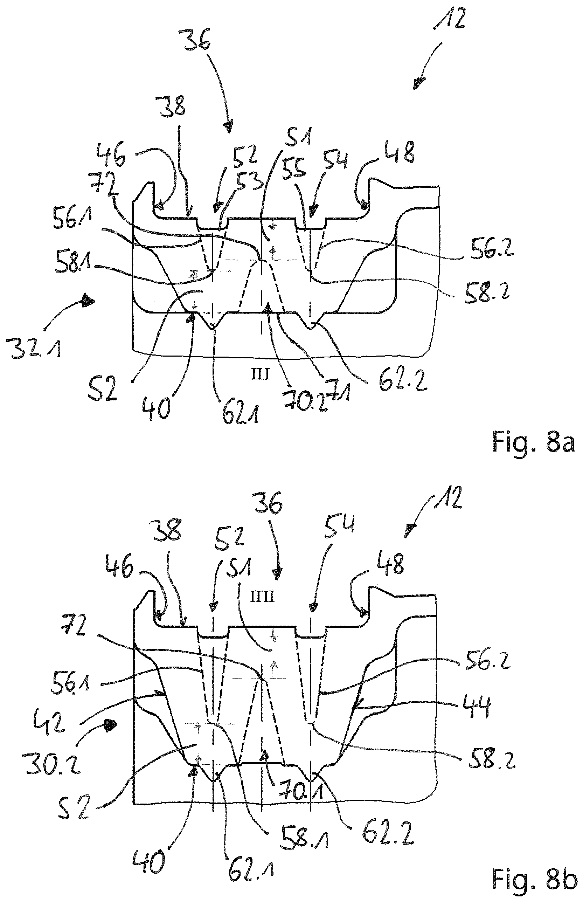

Die Fig. 8a zeigt nun den Führungsbereich 32.1 gemäß Fig. 7a mit verdeutlichtem Verlauf der beiden Außennuten 52 und 54 als auch des Innennutabschnittes 70.2, wobei die beiden Außennuten 52 und 54 und der Innennutabschnitt 70.2 gestrichelt eingezeichnet sind. Gut erkennbar ist die parabolische Ausbildung der Außennuten 52 und 54 und des Innennutabschnitts 70.2. Von einem Nutengrund 58.1 beziehungsweise 58.2 der beiden Außennuten 52 und 54 aus ist eine Materialstärke S2 bestimmbar, bezogen auf die Unterseite 40 des ersten Befestigungsbereiches 12. Ebenso ist eine Materialstärke S1 bestimmbar zwischen einem Nutengrund 72 des Innennutabschnitts 70.2 und der Bindersitzbereichoberfläche 38 des Bindersitzbereiches 36. Die Außennut 52 weist eine Basis 53 und die Außennut 54 eine Basis 55 auf, welche der Öffnungsbreite, im Querschnitt gesehen, der Außennuten 52 und 54 zur Bindersitzbereichoberfläche 38 entspricht. Der Innennutabschnitt 70.2 weist eine Basis 71 auf, welche einer Öffnungsbreite, im Querschnitt gesehen, derselben zur Unterseite 40 des ersten Befestigungsbereiches 12 entspricht. Die Basis 71 des Innennutabschnitts 70.2 ist dabei erheblich breiter ausgestaltet, etwa 70 % breiter als die Basis 53 beziehungsweise 55 der Außennuten 52 und 54. Die Tiefen der Außennuten 52 und 54 einerseits und des Innennutabschnitts 70.2 hingegen sind in etwa ähnlich. Die Außennuten 52 und 54 weisen Nutenwände 56.1 und 56.2 auf, die parabolisch ausgebildet sind.

Fig. 8b zeigt die Einzelheit gemäß Fig. 7b mit durch gestrichelten Linien verdeutlichter Anordnung der beiden Außennuten 52 und 54 und des Innennutabschnitts 70.1. Wie auch in Fig. 8a ist eine Materialstärke S1 bezogen auf die Innennut 70.1 und S2 bezogen auf die beiden Außennuten 52 und 54 bestimmbar. Dabei entsprechen sich die Materialstärken S1 und S2 in etwa. Die Materialstärken S2 sind dabei in etwa gleich stark ausgebildet wie in dem

Führungsbereich 32.1 gemäß Fig. 8a. Ebenso sind die Stärken S1 in dem loben Bereich 30.2 und dem Führungsbereich 32.1 gemäß Fig. 8a in etwa gleich stark ausgebildet. Zudem sind Materialstärken des ersten Befestigungsbereiches 12 zwischen einer Außenwand 42 derselben und einem dieser zugewandten, unmittelbar benachbarten Teil der Nutenwandung 56.1 einerseits und zwischen einer Innenwandung 44 und eines dieser zugewandten Teilbereiches der Nutenwandung 56.2 auf etwa halber Höhe der Außennuten 52 und 54 im Wesentlichen gleich stark ausgebildet. Hierdurch wird die Ableitung von einwirkenden Kräften aufgrund Befestigung eines hier nicht gezeigten Binders verbessert.

Mit der vorliegenden Erfindung ist ein Faltenbalg zur Montage auf einem triloben Gelenkgehäuse zur Verfügung gestellt, welcher verbesserte und gute Dichtungseigenschaften aufweist als auch möglichen Brüchen von Bindern entgegenwirkt.

## Patentansprüche

1. Faltenbalg (10) mit einem ersten und einem zweiten Befestigungsbereich (12, 14) und einem zwischen diesen angeordneten Faltenbereich (16), wobei der erste Befestigungsbereich (12) lobe Bereiche (30.1, 30.2, 30.3) und/oder Führungsbereiche (32.1, 32.2, 32.3) und Verbindungsbereiche (34.1, 34.2. 34.3, 34.4. 34.5, 34.6) und einen Bindersitzbereich (36) mit einer Bindersitzbereichoberfläche (38) und mit einer dieser gegenüberliegend angeordneten Unterseite (40) umfasst, wobei in den Verbindungsbereichen (34.1, 34.2. 34.3, 34.4. 34.5, 34.6) der erste Befestigungsbereich (12) eine geringere Materialstärke aufweist als in den loben Bereichen (30.1, 30.2, 30.3) und/oder Führungsbereichen (32.1, 32.2, 32.3), wobei in den loben Bereichen (30.1, 30.2, 30.3) und/oder in den Führungsbereichen (32.1, 32.2, 32.3) auf der Unterseite (40) mindestens eine Innennut (70.1, 70.2) angeordnet ist, wobei die Innennut (70.1, 70.2) zu einer Mitte der loben Bereiche (30.1, 30.2, 30.3) hin eine zunehmende Tiefe aufweist.

2. Faltenbalg gemäß Anspruch 1, **dadurch gekennzeichnet, dass** eine Materialstärke S1 des Bindersitzbereiches (36), bestimmt zwischen der Bindersitzbereichoberfläche (38) und einem Nutengrund (72) der mindestens einen Innennut (70.1, 70.2), in den loben Bereichen (30.1, 30.2, 30.3) und/oder in den Führungsbereichen (32.1, 32.2, 32.3) im Wesentlichen gleich ist.

3. Faltenbalg gemäß einem oder mehreren der vorhergehenden Ansprüche, **dadurch gekennzeichnet, dass** ausgehend von der Bindersitzbereichoberfläche (38) in den loben Bereichen (30.1, 30.2, 30.3) und/oder in den Führungsbereichen (32.1, 32.2, 32.3) mindestens zwei im Wesentlichen parallel zueinander verlaufende Außennuten (52, 54) angeordnet sind.

4. Faltenbalg gemäß einem oder mehreren der vorhergehenden Ansprüche, **dadurch gekennzeichnet, dass** in einem Querschnitt, definiert durch eine eine Hauptachse (11) des Faltenbalges (10) umfassende und durch den ersten Befestigungsbereich (12) und den zweiten Befestigungsbereich (14) gehende Fläche, die mindestens eine Innennut (70) und/oder die mindestens zwei Außennuten (52, 54) in den loben Bereichen (30.1, 30.2, 30.3) und/oder in den Führungsbereichen (32.1, 32.2, 32.3) im Wesentlichen parabolisch ausgebildet sind.

5. Faltenbalg gemäß einem oder mehreren der vorhergehenden Ansprüche, **dadurch gekennzeichnet, dass** die mindestens eine Innennut (70) und/oder die mindestens zwei Außennuten (52, 54) in den loben Bereichen (30.1, 30.2, 30.3) und/oder in den Führungsbereichen (32.1, 32.2, 32.3) unterschiedliche Tiefen aufweisen.

6. Faltenbalg gemäß einem oder mehreren der vorhergehenden Ansprüche, **dadurch gekennzeichnet, dass** die mindestens zwei Außennuten (52, 54) in den loben Bereichen (30.1, 30.2, 30.3) und/oder in den Führungsbereichen (32.1, 32.2, 32.3) zu der Mitte der loben Bereiche (30.1, 30.2, 30.3) und/oder der Führungsbereiche (32.1, 32.2, 32.3) hin eine zunehmende Tiefe aufweisen.

7. Faltenbalg gemäß einem oder mehreren der vorhergehenden Ansprüche, **dadurch gekennzeichnet, dass** die mindestens eine Innennut (70) in den Führungsbereichen (32.1, 32.2, 32.3) zu der Mitte der Führungsbereiche (32.1, 32.2, 32.3) hin eine zunehmende Tiefe aufweist.

8. Faltenbalg gemäß einem oder mehreren der vorhergehenden Ansprüche, **dadurch gekennzeichnet, dass** in der mindestens einen Innennut (70) und/oder den mindestens zwei Außennuten (52, 54) mindestens eine Verstärkungsrippe (60.1, 60.2, 60.3, 60.4, 60.5, 60.6, 74.1, 74.2) angeordnet ist.

9. Faltenbalg gemäß Anspruch 8, **dadurch gekennzeichnet, dass** zumindest eine der Verstärkungsrippen (60.1, 60.2, 60.3, 60.4, 60.5, 60.6, 74.1, 74.2) radial ausgerichtet ist.

10. Faltenbalg gemäß Anspruch 8, **dadurch gekennzeichnet, dass** zumindest eine der Verstärkungsrippen (60.1, 60.2, 60.3, 60.4, 60.5, 60.6, 74.1, 74.2) winklig zu einer radialen Orientierung des Faltenbalges (10) ausgebildet ist.

11. Faltenbalg gemäß einem oder mehreren der vorhergehenden Ansprüche, **dadurch gekennzeichnet, dass** die mindestens eine Innennut (70.1, 70.2) und/oder die mindestens zwei Außennuten (52, 54) als Ringnuten ausgebildet sind.

12. Faltenbalg gemäß einem oder mehreren der Ansprüche 1 bis 10, **dadurch gekennzeichnet, dass** die mindestens eine Innennut (70) in den loben Bereichen (30.1, 30.2, 30.3) und in den Führungsbereichen (32.1, 32.2, 32.3) angeordnet ist und die mindestens zwei Außennuten (52, 54) als Ringnuten ausgebildet sind.

13. Faltenbalg gemäß einem oder mehreren der Ansprüche 1 bis 10, **dadurch gekennzeichnet, dass** die mindestens eine Innennut (70) und die mindestens zwei Außennuten (52, 54) in den loben Bereichen (30.1, 30.2, 30.3) und in den Führungsbereichen (32.1, 32.2, 32.3) angeordnet sind.

14. Faltenbalg gemäß einem oder mehreren der vorhergehenden Ansprüche, **dadurch gekennzeichnet, dass** im Querschnitt gesehen die mindestens eine, auf der Unterseite (40) des ersten Befestigungsbereiches (12) angeordnete Innennut (70) zwischen den mindestens zwei ausgehend von der Bindersitzbereichoberfläche (38) angeordneten Außennuten (52, 54) angeordnet ist.

15. Faltenbalg gemäß einem oder mehreren der vorhergehenden Ansprüche, **dadurch gekennzeichnet, dass** die mindestens eine Innennut (70) im Wesentlichen mittig bezogen auf einen Querschnitt des ersten Befestigungsbereiches (12) im Bindersitzbereich (36) angeordnet ist.

16. Faltenbalg gemäß einem oder mehreren der vorhergehenden Ansprüche, **dadurch gekennzeichnet, dass** eine Materialstärke (S2) des ersten Befestigungsbereiches (12) unterhalb der mindestens zwei Außennuten (52, 54) in den loben Bereichen (30.1, 30.2, 30.3) und/oder in den Führungsbereichen (32.1, 32.2, 32.3) zwischen deren Nutengrund (58.1, 58.2) und der Unterseite (40) des ersten Befestigungsbereiches (12) im Wesentlichen gleich ist.

17. Faltenbalg gemäß einem oder mehreren der vorhergehenden Ansprüche, **dadurch gekennzeichnet, dass** an der Unterseite (40) des ersten Befestigungsbereiches (12) mindestens zwei Dichtlippen (62.1, 62.2) angeordnet sind.

18. Faltenbalg gemäß Anspruch 17, **dadurch gekennzeichnet, dass** die mindestens zwei Dichtlippen (62.1, 62.2) im Wesentlichen unterhalb der mindestens zwei Außennuten (52, 54) zumindest in den loben Bereichen (30.1, 30.2, 30.3) und/oder in den Führungsbereichen (32.1, 32.2, 32.3) angeordnet sind.

19. Faltenbalg gemäß einem oder mehreren der vorhergehenden Ansprüche, **dadurch gekennzeichnet, dass** in den Verbindungsbereichen (34.1, 34.2. 34.3, 34.4. 34.5, 34.6) an der Unterseite (40) zwei Positionierungsrippen (64.1, 64.2) angeordnet sind.

20. Faltenbalg gemäß Anspruch 19, **dadurch gekennzeichnet, dass** zwischen den Positionierungsrippen (64.1, 64.2) die mindestens zwei Dichtlippen (62.1, 62.2) angeordnet sind.

21. Faltenbalg gemäß einem oder mehreren der Ansprüche 17 bis 20, **dadurch gekennzeichnet, dass** ein Querschnittsprofil der mindestens zwei Dichtlippen (62.1, 62.2) und der zwei Positionierungsrippen (64.1, 64.2) voneinander abweicht.

22. Verwendung eines Faltenbalges (10) gemäß einem oder mehreren der Ansprüche 1 bis 21 zur Abdichtung einer Gelenk-Welle-Verbindung.

23. Gelenk-Welle-Verbindung mit einem Faltenbalg (10) gemäß einem oder mehreren der Ansprüche 1 bis 21.

## Claims

1. Boot (10) that has a first and second fastening region (12, 14) and a convoluted region (16) therebetween, wherein the first fastening region (12) comprises lobe regions (30.1, 20.2, 30.3) and/or guide regions (32.1, 32.2, 32.3) and connecting regions (34.1, 34.2, 34.3, 34.4, 34.5, 34.6), and a binder seat region (36) that has a binder seat region surface (38), and has an undersurface (40) lying opposite, wherein the first fastening region (12) has a lower material thickness in the connecting regions (34.1, 34.2, 34.3, 34.4, 34.5, 34.6) than in the lobe regions (30.1, 30.2, 30.3) and/or in the guide regions (32.1, 32.2, 32.3), wherein there is at least one inner groove (70.1, 70.2) located on the undersurface (40) in the lobe regions (30.1, 30.2, 30.3) and/or in the guide regions (32.1, 32.2, 32.3), wherein the inner groove (70.1, 70.2) has a depth increasing towards a middle of the lobe regions (30.1, 20.2, 30.3).

2. Boot according to claim 1, **characterized in that** a material thickness S1 of the binder seat region (36), determined between the connector seat region surface (38) and a groove base (72) of the at least one inner groove (70.1, 70.2), is substantially the same in the lobe regions (30.1, 30.2, 30.3) and/or in the guide regions (32.1, 32.2, 32.3).

3. Boot according either or both of the preceding claims, **characterized in that** there are at least two substantially parallel outer grooves (52, 54) in the lobe regions (30.1, 30.2, 30.3) and/or in the guide regions (32.1, 32.2, 32.3), starting from the binder seat region surface (38).

4. Boot according to any one or more of the preceding claims, **characterized in that** in a cross section, defined by a plane comprising a main axis (11) of the boot (10) and passing through the first fastening region (12) and the second fastening region (14), the at least one inner groove (70) and/or the at least two outer grooves (52, 54) have a substantially parabolic form in the lobe regions (30.1, 30.2, 30.3) and/or in the guide regions (32.1, 32.2, 32.3).

5. Boot according to any one or more of the preceding claims, **characterized in that** the at least one inner groove (70) and/or the at least two outer grooves (52, 54) have different depths in the lobe regions (30.1, 30.2, 30.3) and/or in the guide regions (32.1, 32.2, 32.3).

6. Boot according to any one or more of the preceding claims, **characterized in that** the depths of the at least two outer grooves (52, 54) increase in the lobe regions (30.1, 30.2, 30.3) and/or in the guide regions (32.1, 32.2, 32.3) toward the middle of the lobe regions (30.1, 30.2, 30.3) and/or the guide regions (32.1, 32.2, 32.3).

7. Boot according to any one or more of the preceding claims, **characterized in that** the depth of the at least one inner groove (70) increases in the guide regions (32.1, 32.2, 32.3) toward the middle of the guide regions (32.1, 32.2, 32.3).

8. Boot according to any one or more of the preceding claims, **characterized in that** there is at least one reinforcement rib (60.1, 60.2, 60.3, 60.4, 60.5, 60.6, 74.1, 74.2) located in the at least one inner groove (70) and/or the at least two outer grooves (52, 54).

9. Boot according to claim 8, **characterized in that** at least one of the reinforcement ribs (60.1, 60.2, 60.3, 60.4, 60.5, 60.6, 74.1, 74.2) has a radial orientation.

10. Boot according to claim 8, **characterized in that** at least one of the reinforcement ribs (60.1, 60.2, 60.3, 60.4, 60.5, 60.6, 74.1, 74.2) is formed at an angle to a radial orientation of the boot (10).

11. Boot according to any one or more of the preceding claims, **characterized in that** the at least one inner groove (70.1, 70.2) and/or the at least two outer grooves (52, 54) form annular grooves.

12. Boot according to any one or more of the claims 1 to 10, **characterized in that** the at least one inner groove (70) is located in the lobe regions (30.1, 30.2, 30.3) and in the guide regions (32.1, 32.2, 32.3), and the at least two outer grooves (52, 54) form annular grooves.

13. Boot according to any one or more of the claims 1 to 10, **characterized in that** the at least one inner groove (70) and the at least two outer grooves (52, 54) are located in the lobe regions (30.1, 30.2, 30.3) and in the guide regions (32.1, 32.2, 32.3).

14. Boot according to any one or more of the preceding claims, **characterized in that** the at least one inner groove (70) located on the undersurface (40) of the first fastening region (12) is located between the at least two outer grooves (52, 54) starting at the binder seat region surface (38), when seen in a cross section.

15. Boot according to any one or more of the preceding claims, **characterized in that** the at least one inner groove (70) is located substantially in the middle of the cross section of the first fastening region (12) in the binder seat region (36).

16. Boot according to any one or more of the preceding claims, **characterized in that** a material thickness (S2) of the first fastening region (12) beneath the at least two outer grooves (52, 54) is substantially the same between their groove bases (58.1, 58.2) and the undersurface (40) of the first fastening region (12) in the lobe regions (30.1, 30.2, 30.3) and/or in the guide regions (32.1, 32.2, 32.3).

17. Boot according to any one or more of the preceding claims, **characterized in that** there are at least two sealing lips (62.1, 62.2) located on the undersurface (40) of the first fastening region (12).

18. Boot according to claim 17, **characterized in that** the at least two sealing lips (62.1, 62.2) are located substantially beneath the at least two outer grooves (52, 54), at least in the lobe regions (30.1, 30.2, 30.3) and/or in the guide regions (32.1, 32.2, 32.3).

19. Boot according to any one or more of the preceding claims, **characterized in that** there are two positioning ribs (64.1, 64.2) on the undersurface (40) in the connecting regions (34.1, 34.2, 34.3, 34.4, 34.5, 34.6).

20. Boot according to claim 19, **characterized in that** the at least two sealing lips (62.1, 25 62.2) are located between the positioning ribs (64.1, 64.2).

21. Boot according to any one or more of the claims 17 to 20, **characterized in that** a cross section profile of the at least two sealing lips (62.1, 62.2) and the two positioning ribs (64.1, 64.2) differs from one another.

22. Use of a boot (10) according to any one or more of the claims 1 to 21 for sealing a joint-shaft connection.

23. Joint-shaft connection that has a boot (10) according to any one or more of the claims 35 1 to 21.

## Revendications

1. Soufflet (10) avec une première et une deuxième zone de fixation (12, 14) et une zone de plis (16) entre celles-ci, dans lequel la première zone de fixation (12) comprend des zones de lobes (30.1, 30.2, 30.3) et/ou des zones de guidage (32.1, 32.2, 32.3) et des zones d'accouplement (34.1, 34.2, 34.3, 34.4, 34.5, 34.6) et une zone de siège d'accouplement (36) comprenant une face supérieure de zone de siège d'accouplement (38) et une face inférieure (40) opposée à celle-ci, dans lequel la première zone de fixation (12) présent dans les zones de raccordement (34.1, 34.2, 34.3, 34.4, 34.5, 34.6) une épaisseur de matériau inférieure à celle des zones de lobes (30.1, 30.2, 30.3) et/ou les zones de guidage (32.1, 32.2, 32.3), dans lequel la rainure intérieure (70.1, 70.2) présentant une profondeur croissante jusqu'à un milieu des zones de lobes (30.1, 30.2, 30.3).

2. Soufflet selon la revendication 1, **caractérisé en ce qu'**une épaisseur de matériau S1 de la zone de siège d'accouplement (36), définie entre la face supérieure de zone de siège d'accouplement (38) et un fond de rainure (72) de l'au moins une rainure intérieure (70.1, 70.2), dans les zones de lobes (30.1, 30.2, 30.3) et/ou dans les zones de guidage (32.1, 32.2, 32.3) est sensiblement égale.

3. Soufflet selon une ou plusieurs des revendications précédentes, **caractérisé en ce qu'**à partir de la face supérieure de zone de siège d'accouplement (38), au moins deux rainures extérieures (52, 54) sensiblement parallèles entre elles sont disposées dans les zones de lobes (30.1, 30.2, 30.3) et/ou dans les zones de guidage (32.1, 32.2, 32.3).

4. Soufflet selon une ou plusieurs des revendications précédentes, **caractérisé en ce que**, vu dans une coupe transversale définie par une surface passant par un axe principal (11) du soufflet (10) et traversant la première zone de fixation (12) et la deuxième zone de fixation siège (14), l'au moins une rainure intérieure (70) et/ou les au moins deux rainures extérieures (52, 54) sont configurées de manière sensiblement parabolique dans les zones de lobes (30.1, 30.2, 30.3) et/ou dans les zones de guidage (32.1, 32.2, 32.3).

5. Soufflet selon une ou plusieurs des revendications précédentes, **caractérisé en ce que** l'au moins une rainure intérieure (70) et/ou les au moins deux rainures extérieures (52, 54) présentent des profondeurs différentes dans les zones de lobes (30.1, 30.2, 30.3) et/ou dans les zones de guidage (32.1, 32.2, 32.3).

6. Soufflet selon une ou plusieurs des revendications précédentes, **caractérisé en ce que** les au moins deux rainures extérieures (52, 54) dans les zones de lobes (30.1, 30.2, 30.3) et/ou dans les zones de guidage (32.1, 32.2, 32.3) présentent une profondeur croissante jusqu'au milieu des zones de lobes (30.1, 30.2, 30.3) et/ou des zones de guidage (32.1, 32.2, 32.3).

7. Soufflet selon une ou plusieurs des revendications précédentes, **caractérisé en ce que** l'au moins une rainure intérieure (70) dans les zones de guidage (32.1, 32.2, 32.3) présente une profondeur croissante jusqu'au milieu de la zone de guidage (32.1, 32.2, 32.3).

8. Soufflet selon une ou plusieurs des revendications précédentes, **caractérisé en ce qu'**au moins une nervure de renfort (60.1, 60.2, 60.3, 60.4, 60.5, 60.6, 74.1, 74.2) est disposée dans l'au moins une rainure intérieure (70) et/ou dans les au moins deux rainures extérieures (52, 54).

9. Soufflet selon la revendication 8, **caractérisé en ce qu'**au moins une des nervures de renfort (60.1, 60.2, 60.3, 60.4, 60.5, 60.6, 74.1, 74.2) est orientée radialement.

10. Soufflet selon la revendication 8, **caractérisé en ce qu'**au moins une des nervures de renfort (60.1, 60.2, 60.3, 60.4, 60.5, 60.6, 74.1, 74.2) forme un angle avec une orientation radiale du soufflet (10).

11. Soufflet selon une ou plusieurs des revendications précédentes, **caractérisé en ce que** l'au moins une rainure intérieure (70.1, 70.2) et/ou les au moins deux rainures extérieures (52, 54) sont configurées comme des rainures annulaires.

12. Soufflet selon une ou plusieurs des revendications 1 à 10, **caractérisé en ce que** l'au moins une rainure intérieure (70) est disposée dans les zones de lobes (30.1, 30.2, 30.3) et dans les zones de guidage (32.1, 32.2, 32.3) et que les au moins deux rainures extérieures (52, 54) sont configurées comme des rainures annulaires.

13. Soufflet selon une ou plusieurs des revendications 1 à 10, **caractérisé en ce que** l'au moins une rainure intérieure (70) et les au moins deux rainures extérieures (52, 54) sont disposées dans les zones de lobes (30.1, 30.2, 30.3) et dans les zones de guidage (32.1, 32.2, 32.3).

14. Soufflet selon une ou plusieurs des revendications précédentes, **caractérisé en ce que**, vu en coupe transversale, l'au moins une rainure intérieure (70) disposée sur la face inférieure (40) de la première zone de fixation (12) est disposée entre les au moins deux rainures extérieures (52, 54) sortant de la face supérieure de zone de siège d'accouplement (38).

15. Soufflet selon une ou plusieurs des revendications précédentes, **caractérisé en ce que** l'au moins une rainure intérieure (70) est disposée sensiblement au milieu par rapport à une coupe transversale de la première zone de fixation (12) dans la zone de siège d'accouplement (36).

16. Soufflet selon une ou plusieurs des revendications précédentes, **caractérisé en ce qu'**une épaisseur de matériau (S2) de la première zone de fixation (12) au-dessous des au moins deux rainures extérieures (52, 54) dans les zones de lobes (30.1, 30.2, 30.3) et/ou dans les zones de guidage (32.1, 32.2, 32.3), entre le fond de leurs rainures (58.1, 58.2) et la face inférieure (40) de la première zone de fixation (12), est sensiblement égale.

17. Soufflet selon une ou plusieurs des revendications précédentes, **caractérisé en ce qu'**au moins deux lèvres d'étanchéité (62.1, 62.2) sont disposées sur la face inférieure (40) de la première zone de fixation (12).

18. Soufflet selon la revendication 17, **caractérisé en ce que** les au moins deux lèvres d'étanchéité (62.1, 62.2) sont disposées sensiblement sous les au moins deux rainures extérieures (52, 54) au moins dans les zones de lobes (30.1, 30.2, 30.3) et/ou les zones de guidage (32.1, 32.2, 32.3).

19. Soufflet selon une ou plusieurs des revendications précédentes, **caractérisé en ce que** deux nervures de positionnement (64.1, 64.2) sont disposées sur la face inférieure (40) dans les zones d'accouplement (34.1, 34.2, 34.3, 34.4, 34.5, 34.6).

20. Soufflet selon la revendication 19, **caractérisé en ce que** les au moins deux lèvres d'étanchéité (62.1, 62.2) sont disposées entre les nervures de positionnement (64.1, 64.2).

21. Soufflet selon une ou plusieurs des revendications 17 à 20, **caractérisé en ce qu'**un profil transversal des au moins deux lèvres d'étanchéité (62.1, 62.2) et un profil transversal des deux nervures de positionnement (64.1, 64.2) sont différents.

22. Utilisation d'un soufflet (10) selon une ou plusieurs des revendications 1 à 21 pour étanchéifier un accouplement d'arbre à cardan.

23. Accouplement d'arbre à cardan avec un soufflet (10) selon une des revendications 1 à 21.
